# EUROPÄISCHE PATENTANMELDUNG

(11) **EP 4 752 418 A2**
(43) Veröffentlichungstag der Anmeldung: **03.06.2026**
(21) Anmeldenummer: 25219180.4
(22) Anmeldetag: 27.11.2025
(51) Int. Cl.: F16L 21/035, F16K 27/00, F16L 37/00, F16L 37/14, F16L 37/56, F16L 41/02

(54) **ADAPTERELEMENT FÜR EINE VENTILEINRICHTUNG UND VENTIL-VERKETTUNGSPLATTE**

(30) Priorität: 29.11.2024 DE 102024135426
(71) Anmelder: Festo SE & Co. KG, 73734 Esslingen (DE)
(72) Erfinder: Wenske, Eduard, 70806 Kornwestheim (DE)
(74) Vertreter: Patentanwälte Magenbauer & Kollegen Partnerschaft mbB

(57) **Zusammenfassung**

Die Erfindung betrifft ein Adapterelement (12) zur fluidischen Anbindung einer Fluidleitung an eine Ventileinrichtung (1), mit einem einen ersten Gehäuseabschnitt (18) und einen zweiten Gehäuseabschnitt (19) aufweisenden Gehäuse (17), das von einem Fluidkanal (38) durchsetzt ist, der eine an dem ersten Gehäuseabschnitt (18) ausgebildete erste Verbindungsschnittstelle (22) mit einer an dem zweiten Gehäuseabschnitt (19) ausgebildeten zweiten Verbindungsschnittstelle (29) fluidisch verbindet, wobei die erste Verbindungsschnittstelle (22) für eine Verbindung mit der Ventileinrichtung (1) ausgebildet ist, wobei die zweite Verbindungsschnittstelle (29) für eine fluidische Verbindung zu einem Fluidverbinder (30) und für eine Festlegung des Fluidverbinders (30) an dem zweiten Gehäuseabschnitt (19) ausgebildet ist, und wobei eine erste Mittelachse (20) des ersten Gehäuseabschnitts (18) und eine zweite Mittelachse (21) des zweiten Gehäuseabschnitts (19) einen Winkel in einem Intervall zwischen 60 und 120 Grad einschließen.

## Beschreibung

Die Erfindung betrifft ein Adapterelement zur fluidischen Anbindung einer Fluidleitung an eine Ventileinrichtung.

Adapterelemente, die auch als Verbinder bezeichnet werden können, werden eingesetzt, um Ventileinrichtungen, beispielhaft eine Ventilinsel, an verschiedene Systeme, in denen die Ventilinsel zum Einsatz kommen soll, anzubinden, ohne dass hierfür die eigentliche Ventilinsel geändert werden muss. So ist es beispielhaft möglich, Adapterelemente als sogenannte Steckverbinder auszuführen, bei denen mittels einer geeigneten Verbindungsschnittstelle eine fluidische Verbindung zwischen der Ventilinsel und den beispielhaft als Schläuche ausgeführten Fluidleitungen des Systems hergestellt werden kann. Regelmäßig sind die Anschlüsse der Ventileinrichtung, in die die Adapterelemente eingesetzt werden und die daher auch als Verbinderaufnahme bezeichenbar sind, in einer Stirnseite der Ventileinrichtung angeordnet. Je nach Einbausituation kann es vorkommen, dass die an der Stirnseite der Ventileinrichtung angeordneten Verbinderaufnahmen nur schwer zu erreichen sind, und so ein Benutzer die fluidische Verbindung nur umständlich herstellen und/oder lösen kann. Auch kann dies dazu führen, dass die als Schläuche ausgeführten Fluidleitungen durch die Einbausituation abgeknickt werden, wenn die Fluidleitungen im Bereich der Stirnseite der Ventileinrichtung nicht senkrecht zu der Stirnseite der Ventileinrichtung verlaufen. Hierfür kommen dann sogenannte Winkelverbinder zum Einsatz, die Adapterelemente darstellen, deren Gehäuse einen ersten Abschnitt und einen zweiten Abschnitt aufweist, die unter einem Winkel zueinander orientiert sind. Da diese Winkelverbinder eine feste Nennweite besitzen, also nur den Anschluss einer Fluidleitung mit einem der Nennweite des Winkelverbinders entsprechenden Außendurchmesser ermöglichen, muss für eine Anbindung an eine Fluidleitung mit einem abweichenden Außendurchmesser der gesamte Winkelverbinder ausgetauscht werden, was jedoch je nach Einbausituation aufwendig ist.

Der vorliegenden Erfindung liegt daher die Aufgabe zugrunde, die Modularität der fluidischen Anbindung zu verbessern.

Zur Lösung dieser Aufgabe ist erfindungsgemäß ein Adapterelement zur fluidischen Anbindung einer Fluidleitung an die Ventileinrichtung vorgesehen, mit einem einen ersten Gehäuseabschnitt und einen zweiten Gehäuseabschnitt aufweisenden Gehäuse, das von einem Fluidkanal durchsetzt ist, der eine an dem ersten Gehäuseabschnitt ausgebildete erste Verbindungsschnittstelle mit einer an dem zweiten Gehäuseabschnitt ausgebildeten zweiten Verbindungsschnittstelle fluidisch verbindet, wobei die erste Verbindungsschnittstelle für eine Verbindung mit der Ventileinrichtung ausgebildet ist, wobei die zweite Verbindungsschnittstelle für eine fluidische Verbindung zu einem Fluidverbinder und für eine Festlegung des Fluidverbinders an dem zweiten Gehäuseabschnitt ausgebildet ist, und wobei eine erste Mittelachse des ersten Gehäuseabschnitts und eine zweite Mittelachse des zweiten Gehäuseabschnitts einen Winkel in einem Intervall zwischen 60 und 120 Grad einschließen.

Für die Verbindung zwischen dem Adapterelement und einer Verbinderaufnahme der Ventileinrichtung kann die erste Verbindungsschnittstelle beispielhaft zumindest abschnittsweise in die Verbinderaufnahme eingebracht werden. Hierfür ist es exemplarisch möglich, die Verbinderaufnahme als Steckverbinder auszuführen, in den die erste Verbindungsschnittstelle mittels einer Verschiebung senkrecht zu der Oberseite der Ventileinrichtung, beispielhaft die Stirnseite, in Richtung der Ventileinrichtung verschoben wird. Die zweite Verbindungsschnittstelle ist ausgebildet, um fluidisch mit dem Fluidverbinder verbunden zu werden und diesen festzulegen. Unter Festlegen wird dabei verstanden, dass der Fluidverbinder im Anschluss nicht mehr translatorisch relativ zu dem Adapterelement verschoben werden kann. Es ist dabei auch ausreichend, dass eine translatorische Verschiebung nur in dem Maße möglich ist, dass ein den Fluidverbinder durchsetzender Fluidverbinder-Kanal mit dem Kanal des Adapterelements fluidisch verbunden bleibt. Je nach genauer Ausgestaltung der zweiten Verbindungsschnittstelle und/oder eines am Fluidverbinder ausgebildeten Aufnahmeabschnitt kann eine Rotationsbewegung des Fluidverbinders ermöglicht oder verhindert werden.

Der Fluidverbinder ist dabei auf die Fluidleitungen angepasst, mit denen die Ventileinrichtung fluidisch verbunden werden soll. Entsprechend kann die Ventileinrichtung mittels der erfindungsgemäß ausgestalteten Adapterelemente dadurch an eine neue Fluidleitung, die sich beispielhaft im Außendurchmesser unterscheidet, angepasst werden, dass der Fluidverbinder von der zweiten Verbindungsschnittstelle getrennt wird und durch einen anderen Fluidverbinder ersetzt wird. So wird beispielhaft ermöglicht, dass eine Ventileinrichtung, die zuvor in einem System mit zölligen Fluidleitungen eingesetzt wurde, durch einen Austausch des Fluidverbinders in einem System mit metrischen Fluidleitungen eingesetzt wird. Durch die winkelige Ausgestaltung des Adapterelements ist es darüber hinaus möglich, dass das Adapterelement so gedreht wird, dass die Verbindungsschnittstelle für einen Benutzer gut zu erreichen ist und es im Einsatz nicht zu einer zu starken Umlenkung oder zu einem Abknicken der mit der Ventileinrichtung verbundenen Fluidleitung kommt.

Vorzugweise beträgt der Winkel zwischen der ersten Mittelachse des ersten Gehäuseabschnitts und der zweiten Mittelachse des zweiten Gehäuseabschnitts 90°. So wird beispielhaft ermöglicht, dass die zweite Verbindungsschnittstelle, wenn die Verbinderaufnahmen an der Stirnseite ausgebildet sind, beispielhaft von einer senkrecht zur Stirnseite orientierten Oberseite der Ventileinrichtung erreichbar sind, sodass ein Benutzer diese bequem erreichen kann.

Bevorzugt weist die zweite Verbindungsschnittstelle eine Befestigungselementaufnahme, insbesondere eine Ausnehmung, zur Aufnahme eines Befestigungselements, insbesondere eine Befestigungsklammer, auf, wobei weiter bevorzugt das Befestigungselement zur Festlegung des Fluidverbinders abschnittsweise in die Befestigungselementaufnahme und in den Aufnahmeabschnitt des Fluidverbinders eingreifen kann. Dies ist insbesondere vorteilhaft, wenn die erste Verbindungsschnittstelle und der Fluidverbinder für eine Steckverbindung ausgestaltet sind, deren Trennung nur mittels des Befestigungselements verhindert wird. Der Aufnahmeabschnitt kann dabei in Form einer radial umlaufenden Nut in einem Verbinder-Zylinderabschnitt ausgeführt sein, wobei der Verbinder-Zylinderabschnitt zumindest abschnittsweise in der Verbindungsschnittstelle aufgenommen wird, wenn der Fluidverbinder mit der Verbindungsschnittstelle verbunden ist. Bei der radial umlaufenden Nut wird eine Rotation des Fluidverbinders nicht verhindert. Alternative Ausgestaltungen des Aufnahmeabschnitts und/oder des Befestigungselements, die eine Rotation verhindern, sind denkbar.

In einer weiter bevorzugten Ausgestaltung weist die erste Verbindungsschnittstelle ein Gewinde auf. Dieses Gewinde ist ausgebildet, um in eine entsprechend mit einem Gewinde versehene Verbinderaufnahme eingesetzt zu werden. Bevorzugt kann eine Steigung des jeweiligen Gewindes derart gewählt werden, dass eine Selbsthemmung vorliegt und so zusätzliche Befestigungselemente zur Festlegung des Adapterelements in der Verbinderaufnahme nicht erforderlich sind.

In einer Ausgestaltung des Adapterelements weist die erste Verbindungsschnittstelle eine Spiralnut oder ein radial gegenüber dem ersten Gehäuseabschnitt vorstehendes Rastelement auf. Entsprechend kann das Adapterelement mit einer als Bajonettanschluss ausgeführten Verbinderaufnahme verbunden werden, die entweder über ein in die Spiralnut eingreifendes Aufnahme-Rastelement oder über eine Aufnahme-Spiralnut, in die das Rastelement eingreifen kann, verfügt.

Vorteilhafterweise ist die erste Verbindungsschnittstelle für eine Steckverbindung ausgeführt, wobei die erste Verbindungsschnittstelle eine Ausnehmung, insbesondere eine radial umlaufende Nut aufweist, in die ein Befestigungselement, insbesondere eine Befestigungsklammer, eingreifen kann. So kann das Adapterelement leicht in die Verbinderaufnahme eingebracht und mittels eines Befestigungselements in dieser festgelegt werden. Hierfür ist bevorzugt im Bereich der Verbinderaufnahme eine Adapterbefestigungsschnittstelle ausgebildet, die bevorzugt in Form einer Ausnehmung ausgebildet ist. So kann nach dem Verbinden des Adapterelements in der Verbinderaufnahme mittels der ersten Verbindungsschnittstelle das Adapterelement festgelegt werden, indem das Befestigungselement in die Adapterbefestigungsschnittstelle eingeführt und in dieser verriegelt wird. In diesem verriegelten Zustand erstreckt sich das Befestigungsmittel sowohl in der Adapterbefestigungsschnittstelle als auch in der Ausnehmung des Adapterelement, sodass das Adapterelement mittelbar mechanisch mit der Adapterbefestigungsschnittstelle und dementsprechend mit der Ventileinrichtung verbunden ist. Soll das Adapterelement wieder von der Ventileinrichtung getrennt werden, so muss zunächst die Klammer aus der Verriegelung gelöst und entfernt werden. Vorteilhaft kann die Adapterschnittstelle derart an der Ventileinrichtung ausgebildet sein, dass das Befestigungselement aus der gleichen Raumrichtung wie die Fluidleitungen für einen Benutzer einfach zugänglich ist.

Vorteilhafterweise ist die zweite Verbindungsschnittstelle zu der ersten Verbindungsschnittstelle korrespondierend ausgeführt. Unter korrespondierend wird dabei verstanden, dass eine Geometrie der zweiten Verbindungsschnittstelle zu der entsprechenden Geometrie der ersten Verbindungsschnittstelle ähnlich ausgeführt ist. Beispielhaft entspricht ein Innendurchmesser der zweiten Verbindungsschnittstelle einem Außendurchmesser der ersten Verbindungsschnittstelle, sodass die erste Verbindungsschnittstelle in die zweite Verbindungsschnittstelle eingesetzt werden könnte. Bei einer derartigen Ausgestaltung kann entsprechend in der Verbinderaufnahme der Ventileinrichtung entweder ein erfindungsgemäßes Adapterelement oder ein Fluidverbinder eingesetzt werden. Verfügt die Ventileinrichtung über mehrere Verbinderaufnahmen, so ist eine beliebige Kombination aus Adapterelementen und Fluidverbindern möglich, über die die Ventileinrichtung mit den Fluidleitungen fluidisch verbunden werden kann.

Weiter vorteilhaft ist eine Erstreckung des ersten Gehäuseabschnitts entlang der ersten Mittelachse größer als eine Erstreckung des zweiten Gehäuseabschnitts entlang der zweiten Mittelachse. So wird eine L-förmige Ausgestaltung des Adapterelements erreicht, bei der beispielhaft verschiedene Adapterelemente zum Einsatz kommen, von denen manche ein Gehäuse mit einer identischen Erstreckung des ersten Gehäuseabschnitts und des zweiten Gehäuseabschnitts aufweisen und manche ein Gehäuse mit der zuvor beschriebenen ungleichen Erstreckung des ersten Gehäuseabschnitts und des zweiten Gehäuseabschnitts aufweisen. Die ist besonders bei Ventileinrichtungen von Vorteil, die über mehrere und voneinander beabstandete Verbinderaufnahmen verfügen, da beim Einsatz von unterschiedlichen Adaptergehäusen die Fluidverbinder weiterhin für einen Benutzer zugänglich sind und nicht durch einen mit einem anderen Adapterelement verbundenen Fluidverbinder verdeckt werden und/oder das Einführen weiterer Adapterelemente unmöglich wäre.

Die zuvor definierte Aufgabe wird auch gelöst durch eine Ventil-Verkettungsplatte zum Einsatz in einer Ventileinrichtung, mit einer ersten an einer Stirnseite eines Ventilscheibengehäuses ausgebildeten ersten Verbinderaufnahme und einer an der Stirnseite ausgebildeten zweiten Verbinderaufnahme, die von der ersten Verbinderaufnahme beabstandet ist, wobei die erste Verbinderaufnahme und die zweite Verbinderaufnahme jeweils für eine Aufnahme eines erfindungsgemäßen Adapterelements ausgestaltet ist.

Ventil-Verkettungsplatten kommen insbesondere in Ventileinrichtungen zum Einsatz, die aus mehreren modulartigen Elementen bestehen, die in einer Raumrichtung aneinandergereiht und fluidisch verbunden sind. Beispielhaft bestehen solche Ventileinrichtungen aus einer Versorgungsplatte, einer von dieser in der Raumrichtung, in der die modulartigen Elemente aneinandergereiht werden, beabstandeten Endplatte und einer Anzahl von Ventilscheiben. Jede Ventilscheibe wird dabei aus einem Ventilelement und einer Ventil-Verkettungsplatte gebildet, wobei in der Ventil-Verkettungsplatte verschiedene Fluidkanäle, die auch als Plattenkanäle bezeichnet werden können, vorgesehen sind. Diese Plattenkanäle verbinden zum einen die jeweilige Ventilscheibe mit der Versorgungsplatte, der Endplatte und/oder benachbarten Ventilscheiben und zum anderen das jeweils auf der Ventil-Verkettungsplatte angeordnete Ventilelement mit an einer Stirnseite der Ventil-Verkettungsplatte ausgebildeten Verbinderaufnahmen, insbesondere einer ersten Verbinderaufnahme und einer zweiten Verbinderaufnahme. Beispielhaft soll die derart ausgeführte Ventileinrichtung über die erste Verbinderaufnahme und die zweite Verbinderaufnahme mit einem System verbunden werden. Die Versorgungsplatte weist einen Verbindungsanschluss zur Verbindung zu einer Fluidquelle auf, um beispielhaft die Ventileinrichtung mit Druckluft zu versorgen. Auch Vakuumanwendungen sind denkbar, bei denen die Versorgungsplatte anstatt mit einer Fluidquelle mit einer Fluidsenke zur Bereitstellung eines Vakuums verbunden werden kann.

Bevorzugt sind ein erstes Adapterelement in der ersten Verbinderaufnahme der Ventil-Verkettungsplatte und ein zweites Adapterelement in der zweiten Verbinderaufnahme der Ventil-Verkettungsplatte angeordnet, wobei die Erstreckung des ersten Gehäuseabschnitts des ersten Adapterelements größer als die Erstreckung des ersten Gehäuseabschnitts des zweiten Adapterelements ist. So wird eine gegenseitige Behinderung der Adapterelemente verhindert und ein Benutzer kann die mit den Adapterelementen verbundenen Fluidverbinder gut erreichen.

Vorzugsweise ist die zweite Verbindungsschnittstelle des ersten Adapterelements und/oder die zweite Verbindungsschnittstelle des zweiten Adapterelements in Richtung einer Oberseite oder in Richtung einer Unterseite der Ventilverkettungsplatte orientiert. So wird ermöglicht, dass die jeweilige Verbindungsschnittstelle des jeweiligen Adapterelements aus Richtung der Oberseite oder aus Richtung der Unterseite erreichbar ist, wobei die jeweilige Orientierung in Abhängigkeit von der Raumrichtung gewählt werden kann, aus der die jeweilige Fluidleitung zur Ventileinrichtung verläuft.

Bevorzugt ist die erste Verbinderaufnahme aus der Gruppe: Einschraub-Verbinderaufnahme, Bajonett-Verbinderaufnahme, Einsteck-Verbinderaufnahme und die zweite Verbinderaufnahme aus der Gruppe: Einschraub-Verbinderaufnahme, Bajonett-Verbinderaufnahme, Einsteck-Verbinderaufnahme ausgewählt. Durch eine geeignete Auswahl für die erste Verbinderaufnahme und die zweite Verbinderaufnahme wird ermöglicht, dass die Ventil-Verkettungsplatte für den vorgesehenen Einsatzort, genauer die in diesem zu erwartenden Verbinder, angepasst wird.

Weiter bevorzugt ist an der Stirnseite eine Adapterbefestigungsschnittstelle ausgebildet, die sich zumindest abschnittsweise über den Bereich der ersten Verbinderaufnahme und zumindest abschnittsweise über den Bereich der zweiten Verbinderaufnahme erstreckt und die zur Aufnahme eines Befestigungselements, insbesondere in Form einer Befestigungsklammer, zur gemeinsamen Festlegung des in der ersten Verbinderaufnahme aufgenommenen Adapterelements und des in der zweiten Verbinderaufnahme aufgenommenen Adapterelements ausgebildet ist. So kann ein Benutzer das in der ersten Verbinderaufnahme angeordnete und das in der zweiten Verbinderaufnahme aufgenommenen Adapterelement zeitgleich festlegen oder die Verbindung wieder lösen. So kann insbesondere ein Montageaufwand in Ventileinrichtungen reduziert werden, die eine Vielzahl von Ventilscheiben aufweisen, die über eine erste Verbinderaufnahme und eine zweite Verbinderaufnahme verfügen. Bevorzugt ist dabei die Adapterbefestigungsschnittstelle derart an der Stirnseite angeordnet, dass ein Benutzer das Befestigungselement aus der Raumrichtung erreichen kann, aus der auch die Fluidleitungen zu der Ventileinrichtung verlaufen oder aus der sie mit der Ventileinrichtung verbunden werden.

Nachfolgend wird die Erfindung anhand der beiliegenden Zeichnung näher erläutert und in dieser zeigen
- Figur 1: eine als Ventilinsel ausgeführte Ventileinrichtung mit mehreren entlang einer Aufreihungsrichtung aneinandergereihten Ventilscheiben in einer perspektivischen Ansicht,
- Figur 2: eine Ventil-Verkettungsplatte der Ventileinrichtung mit zwei Adapterelementen in einer ersten Ausrichtung in einer Seitenansicht,
- Figur 3: eine Explosionsdarstellung einer Adapterbaugruppe in einer perspektivischen Ansicht und
- Figur 4: eine Ventil-Verkettungsplatte der Ventileinrichtung mit zwei Adapterelementen in einer zweiten Ausrichtung in einer Seitenansicht.

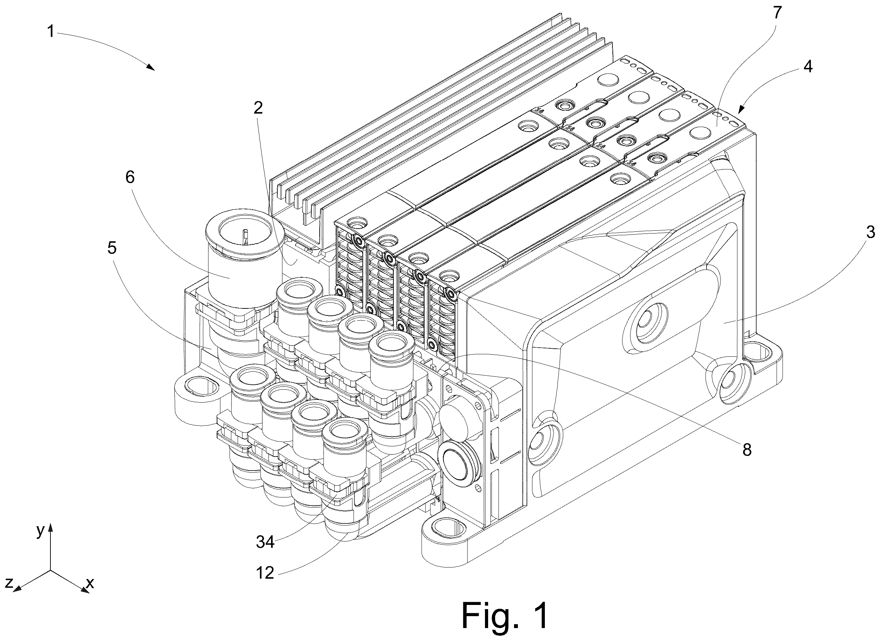

In der Figur 1 ist eine Ventileinrichtung 1 gezeigt, die rein exemplarisch durch eine Versorgungsplatte 2, eine von der Versorgungsplatte 2 beabstandet angeordnete Endplatte 3 sowie vier zwischen der Versorgungsplatte 2 und der Endplatte 3 angeordneten Ventilscheiben 4 gebildet wird. Die Versorgungsplatte 2, die Ventilscheiben 4 sowie die Endplatte 3 sind vorliegend modulartig ausgeführt und entlang einer Raumrichtung aneinandergereiht. Exemplarisch kann diese Raumrichtung als Querrichtung der gezeigten Ventileinrichtung 1 bezeichnet werden, zu der orthogonal eine Höhenrichtung der gezeigten Ventileinrichtung 1 verläuft. Eine Längsrichtung der gezeigten Ventileinrichtung 1 verläuft orthogonal zu der Querrichtung und orthogonal zu der Höhenrichtung.

Die Querrichtung, die auch als x-Richtung bezeichnet werden kann, die Höhenrichtung, die auch als y-Richtung bezeichnet werden kann, und die als z-Richtung bezeichenbare Längsrichtung definieren zusammen ein kartesisches Koordinatensystem.

Im Bereich einer Stirnseite 5 der Versorgungsplatte 2 ist ein als Steckverbinder ausgeführter Versorgungsanschluss 6 angeordnet, über den die Ventileinrichtung 1 beispielhaft mit Druckluft versorgt werden kann. Für eine interne Weiterleitung der Druckluft sind die Versorgungsplatte 2, die Ventilscheiben 4 und die Endplatte 3 fluidisch über nicht dargestellte Fluidkanäle verbunden.

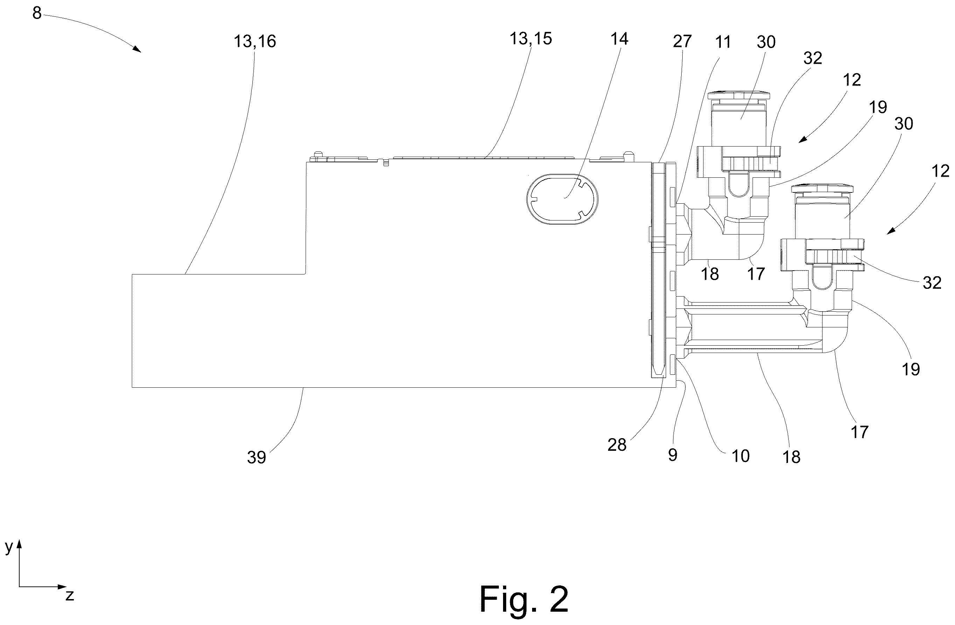

Die gezeigten Ventilscheiben 4 werden exemplarisch jeweils durch ein Ventilelement 7 und eine Ventil-Verkettungsplatte 8 gebildet, die fluidisch miteinander verbunden sind. An einer jeweiligen Stirnseite 9 der jeweiligen Ventil-Verkettungsplatte 8 sind eine erste Verbinderaufnahme 10 und eine zweite Verbinderaufnahme 11 ausgebildet, die jeweils zur Aufnahme eines Adapterelements 12 vorgesehen sind. Die Ventil-Verkettungsplatten 8 sind jeweils von Fluidkanälen, die auch als Plattenkanäle bezeichnet werden können, durchsetzt, die die jeweilige Ventil-Verkettungsplatte 8 mit der Versorgungsplatte 1, der Endplatte 3 und/oder der benachbarten Ventil-Verkettungsplatte 8 fluidisch verbinden sowie eine fluidische Verbindung zwischen dem jeweils an einer Oberseite 13 (Figur 2) der Ventil-Verkettungsplatte 8 angebrachten Ventilelement 7 und der an der Stirnseite 9 ausgebildeten ersten Verbinderaufnahme 10 und zweiten Verbinderaufnahme 11 herstellt. Beispielhaft kann in der jeweiligen Ventilscheibe 4 mindestens ein Ventilelement 7 angeordnet sein, dass in einem ersten Schaltzustand eine Durchleitung eines Massenstroms an Druckluft zu der ersten Verbinderaufnahme 10 und in einem zweiten Schaltzustand eine Durchleitung eines Massenstroms an Druckluft zu der zweiten Verbinderaufnahme 11 ermöglicht. Auch sind weitere und/oder alternative Schaltzustände denkbar.

Eine einzelne Ventil-Verkettungsplatte 8 der exemplarisch gezeigten Ventileinrichtung 1 ist in der Figur 2 in einer Seitenansicht dargestellt. Nur rein exemplarisch ist in der Figur 2 ein einzelner Plattenkanal 14 gezeigt, der sich in Querrichtung durch die Ventil-Verkettungsplatte 8 erstreckt. Die Oberseite 13 der Ventil-Verkettungsplatte 8 wird durch einen ersten Oberseitenabschnitt 15 und einen zweiten Oberseitenabschnitt 16 gebildet, wobei der erste Oberseitenabschnitt 15 und der zweite Oberseitenabschnitt 16 voneinander, vorliegend in Richtung der y-Achse, beabstandet sind. Die jeweiligen, nicht im Detail dargestellten Ventilelemente 7 sind entsprechend im Wesentlichen L-förmig ausgestaltet.

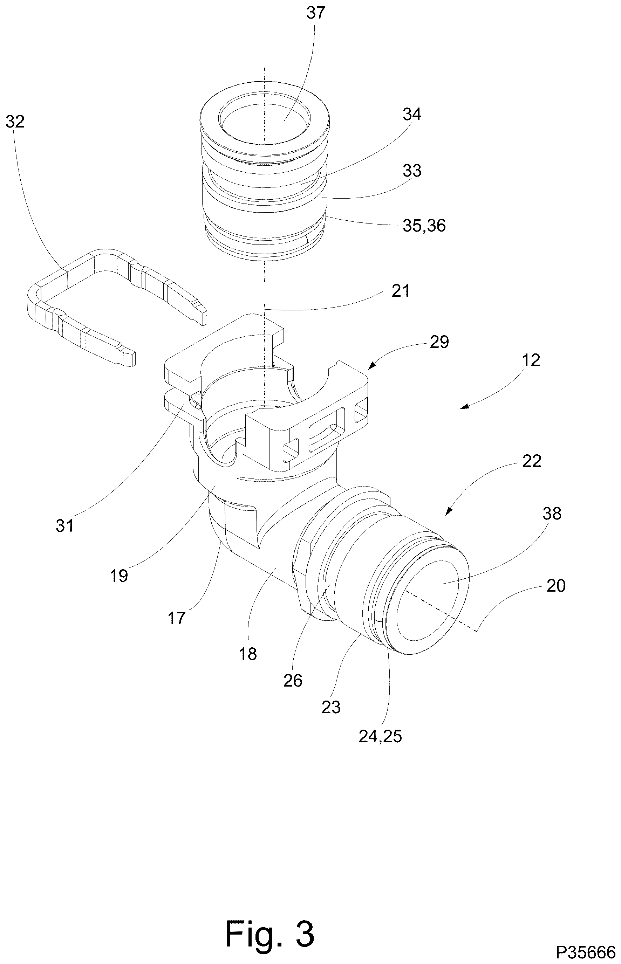

Wie in der Figur 2 zu erkennen ist, sind das abschnittsweise in der ersten Verbinderaufnahme 10 aufgenommene Adapterelement 12 und das abschnittsweise in der zweiten Verbinderaufnahme 11 aufgenommene Adapterelement 12 unterschiedlich ausgeführt. Für eine leichtere Zuordnung soll das in der ersten Verbinderaufnahme 10 aufgenommene Adapterelement 12 als erstes Adapterelement 12 und das in der zweiten Verbinderaufnahme 11 aufgenommene Adapterelement 12 als zweites Adapterelement 12 bezeichnet werden. Es ist jedoch auch denkbar, dass das erste Adapterelement 12 und das zweite Adapterelement 12 identisch ausgeführt sind. Das zweite Adapterelement 12 ist auch in der in der Figur 3 ersichtlichen Explosionsdarstellung einer Adapterbaugruppe gezeigt.

Beide Adapterelemente 12 weise jeweils ein Gehäuse 17 auf, das von einem ersten Gehäuseabschnitt 18 und einem zweiten Gehäuseabschnitt 19 gebildet wird. Der erste Gehäuseabschnitt 18 und der zweite Gehäuseabschnitt 19 sind dabei exemplarisch derart zueinander orientiert, dass eine erste Mittelachse 20 des ersten Gehäuseabschnitts 18 und eine zweite Mittelachse 21 des zweiten Gehäuseabschnitts 19 einen Winkel einschließen. Bei der gezeigten Ausführungsform der Adapterelemente 12 beträgt der Winkel 90 Grad, kann jedoch grundsätzlich in einem Intervall von 60 bis 120 Grad liegen. Weiter denkbar ist es auch, dass der Winkel bei dem ersten Adapterelement 12 sich von dem Winkel bei dem zweiten Adapterelement 12 unterscheidet.

An einem dem zweiten Gehäuseabschnitt 19 abgewandten Ende des ersten Gehäuseabschnitts 18 ist eine erste Verbindungsschnittstelle 22 ausgebildet. Die erste Verbindungsschnittstelle 22 ist exemplarisch für eine Steckverbindung zur fluidischen Verbindung zwischen dem ersten Adapterelement 12 und der ersten Verbinderaufnahme 10 ausgebildet, wobei die erste Verbindungsschnittstelle 22 einen zur Aufnahme in einer entsprechend ausgebildeten Öffnung (nicht dargestellt) der ersten Verbinderaufnahme 10 vorgesehenen Zylinderabschnitt 23 aufweist. Für eine fluidische Abdichtung der Verbindung ist ein in einer an dem Zylinderabschnitt 23 der ersten Verbindungsschnittstelle 22 ausgebildeten Dichtungsnut 24 aufgenommener Dichtungsring 25 vorgesehen, der insbesondere aus einem gummielastischen Material hergestellt sein kann. Von der Dichtungsnut 24 entlang der ersten Mittelachse 20 beabstandet ist an dem Zylinderabschnitt 23 der ersten Verbindungsschnittstelle 22 eine Ausnehmung 26 in Form einer radial umlaufenden Nut ausgebildet, in die ein Befestigungselement 27 zur Festlegung des Adapterelements 12 eingreift. Das Befestigungselement 27 ist vorliegend exemplarisch als Befestigungsklammer ausgeführt. In dem gezeigten Ausführungsbeispiel wird unter Festlegung dabei verstanden, dass das Adapterelement 12 nicht mehr translatorisch in Längsrichtung relativ zu der Stirnseite 9 der Ventil-Verkettungsplatte 8 verschoben werden kann. Eine Rotation um die erste Mittelachse 20 ist jedoch weiterhin möglich und erlaubt es, das jeweilige Adapterelement 12 in der ersten Verbinderaufnahme 10 oder in der zweiten Verbinderaufnahme 11 zu Ausrichtungszwecken zu rotieren.

In dem gezeigten Ausführungsbeispiel ist an der Stirnseite 9 der jeweiligen Ventil-Verkettungsplatte 8 eine Adapterbefestigungsschnittstelle 28 in Form einer Ausnehmung ausgebildet, die sich abschnittsweise über den Bereich der ersten Verbinderaufnahme 10 und abschnittsweise über den Bereich der zweiten Verbinderaufnahme 11 erstreckt. Die Adapterbefestigungsschnittstelle 28 ist zur abschnittsweisen Aufnahme des Befestigungselements 27, das auch als Adapterbefestigungselement bezeichnet werden kann, ausgebildet und legt vorliegend das erste Adapterelement 12 in der ersten Verbinderaufnahme 10 und das zweite Adapterelement 12 in der zweiten Verbinderaufnahme 11 fest. Das erste Adapterelement 12 und das zweite Adapterelement 12 sind entsprechend gemeinsam festgelegt. Somit muss, wenn das erste Adapterelement 12 und das zweite Adapterelement 12 ausgetauscht werden sollen, nur das eine Befestigungselement 27 entfernt werden. Unter Entfernen ist hierbei beispielhaft eine translatorische Verschiebung des Befestigungselements 27 entlang der Höhenrichtung gemeint, derart, dass das Befestigungselement 27 nicht mehr in die Ausnehmung 26 des ersten Adapterelements 12 und des zweiten Adapterelements 12 eingreift.

An dem dem ersten Gehäuseabschnitt 18 entgegengesetzten Ende des zweiten Gehäuseabschnitts 19 ist eine zweite Verbindungsschnittstelle 29 ausgebildet, in der exemplarisch ein Fluidverbinder 30 aufgenommen werden kann. Der Fluidverbinder 30 ist beispielhaft als Steckverbinder ausgeführt, der mit einer nicht gezeigten Fluidleitung, insbesondere in Form eines Schlauches, fluidisch verbunden werden kann. Beispielsweise können so mit jeder Ventilscheibe 4 pneumatische Aktoren (nicht gezeigt) fluidisch verbunden werden und eine von dem Schaltzustand abhängige Aktion durchführen.

Der exemplarisch dargestellte Fluidverbinder 30 weist einen Verbinder-Zylinderabschnitt 33 auf, der in der zweiten Verbindungsschnittstelle 29 aufgenommen werden kann. An der zweiten Verbindungsschnittstelle 29 ist eine Befestigungselementaufnahme 31 in Form einer Ausnehmung ausgebildet, in die ein Befestigungselement 32 abschnittsweise eingreifen kann. Das Befestigungselement 32 ist in dem gezeigten Ausführungsbeispiel als Befestigungsklammer ausgeführt. Zur Festlegung des Fluidverbinders 30 in der zweiten Verbindungsschnittstelle 29 ist an einem Verbinder-Zylinderabschnitt 33 ein als radial umlaufende Nut ausgeführter Aufnahmeabschnitt 34 vorgesehen, in die das Befestigungselement 32 abschnittsweise eingreifen kann, wenn der Fluidverbinder 30 in der zweiten Verbindungsschnittstelle 29 aufgenommen ist. Unter Festlegen wird dabei exemplarisch verstanden, dass der Fluidverbinder 30 nicht mehr translatorisch in Höhenrichtung relativ zu dem Adapterelement 12 verschoben werden kann. Eine Rotation um die zweite Mittelachse 21 ist jedoch weiterhin möglich. Es ist jedoch auch denkbar, dass auch eine Rotation durch entsprechende Ausgestaltung des Aufnahmeabschnitts 34 des Fluidverbinders 30 festgelegt wird.

Für eine fluidische Abdichtung der Verbindung ist ein in einer an dem Verbinder-Zylinderabschnitt 33 des Fluidverbinders 30 ausgebildeten Dichtungsnut 35 aufgenommener Dichtungsring 36 vorgesehen, der insbesondere aus einem gummielastischen Material hergestellt sein kann. Die Dichtungsnut 35 ist von der Ausnehmung 34 beabstandet an dem Verbinder-Zylinderabschnitt 33 des Fluidverbinders 30 angeordnet.

Der Fluidverbinder 30 ist von einem Fluidverbinder-Kanal 37 durchsetzt, der, wenn der Fluidverbinder 30 in der zweiten Verbindungsschnittstelle 29 aufgenommen ist, fluidisch mit einem das Gehäuse 17 des Adapterelements 12 durchsetzenden Fluidkanal 38 verbunden ist. Der Fluidkanal 38 verbindet die erste Verbindungsschnittstelle 22 mit der zweiten Verbindungsschnittstelle 29.

Bei dem gezeigten Ausführungsbeispiel des Adapterelements 12 sind die erste Verbindungsschnittstelle 22 und die zweite Verbindungsschnittstelle 29 zueinander korrespondierend ausgestaltet, sodass die erste Verbindungsschnittstelle 22 in die zweite Verbindungsschnittstelle 29 eingesetzt werden könnte. Da der Fluidverbinder 30 für die Verbindung mit der zweiten Verbindungsschnittstelle 29 ausgebildet ist, ist bei der gezeigten korrespondierenden Ausgestaltung der ersten Verbindungsschnittstelle 22 und der zweiten Verbindungsschnittstelle 29 der Fluidverbinder 30 analog zur ersten Verbindungsschnittstelle 22 ausgeführt und kann entsprechend ebenfalls in der ersten Verbinderaufnahme 10 oder der zweiten Verbinderaufnahme 11 angeordnet werden. Entsprechend wird vorliegend ermöglicht, dass die Ventilscheiben 4 zur Anbindung der exemplarisch dargestellten Ventileinrichtung 1 an der jeweiligen ersten Verbinderaufnahme 10 und der zweiten Verbinderaufnahme 11 wahlweise mit Adapterelementen 12, einer Kombination aus Adapterelement 12 und Fluidverbinder 30 oder nur mit Fluidverbindern 30 bestückt sind.

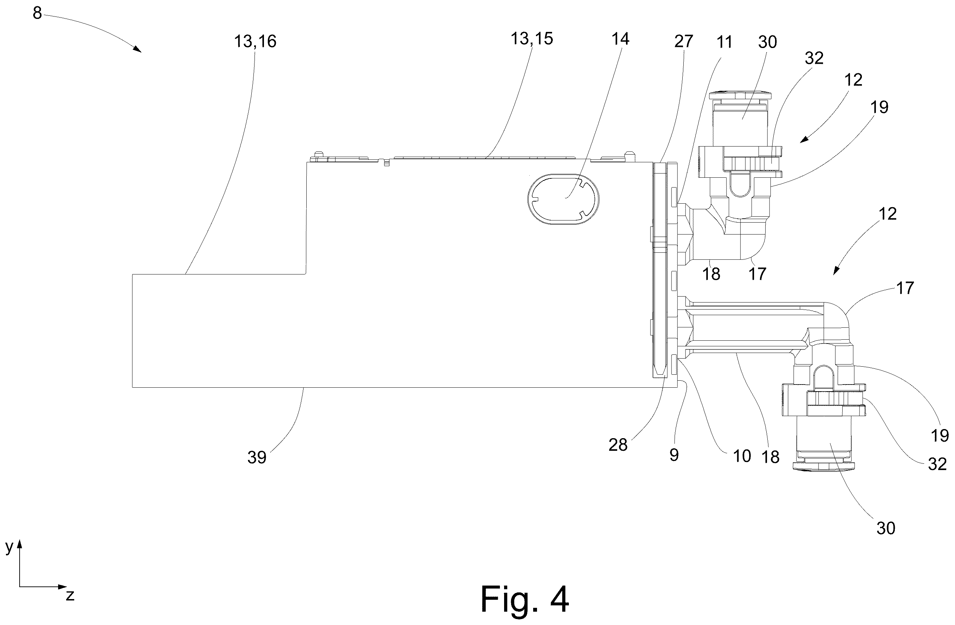

In dem in Figur 2 gezeigten Ausführungsbeispiel sind das erste Adapterelement 12 und das zweite Adapterelement 12 derart angeordnet, dass die jeweilige zweite Verbindungsschnittstelle 29 in Richtung der Oberseite 13 der Ventilverkettungsplatte 8 orientiert sind. Entsprechend ist die jeweilige zweite Verbindungsschnittstelle 29 aus Richtung der Oberseite 13 der Ventilverkettungsplatte 8 erreichbar. Alternativ können das erste Adapterelemente 12 und/oder das zweite Adapterelement 12 zu einer Unterseite 39 der Ventilverkettungsplatte 8 orientiert sein. In Figur 4 ist ein weiteres Ausführungsbeispiel gezeigt, bei dem das erste Adapterelement 12 derart in der ersten Verbinderaufnahme 10 der Ventilverkettungsplatte 8 aufgenommen ist, dass die zweite Verbindungsschnittstelle 29 des ersten Adapterelements 12 in Richtung der Unterseite 39 der Ventilverkettungsplatte 8 orientiert ist.

## Patentansprüche

1. Adapterelement (12) zur fluidischen Anbindung einer Fluidleitung an eine Ventileinrichtung (1), mit einem einen ersten Gehäuseabschnitt (18) und einen zweiten Gehäuseabschnitt (19) aufweisenden Gehäuse (17), das von einem Fluidkanal (38) durchsetzt ist, der eine an dem ersten Gehäuseabschnitt (18) ausgebildete erste Verbindungsschnittstelle (22) mit einer an dem zweiten Gehäuseabschnitt (19) ausgebildeten zweiten Verbindungsschnittstelle (29) fluidisch verbindet, wobei die erste Verbindungsschnittstelle (22) für eine Verbindung mit der Ventileinrichtung (1) ausgebildet ist, wobei die zweite Verbindungsschnittstelle (29) für eine fluidische Verbindung zu einem Fluidverbinder (30) und für eine Festlegung des Fluidverbinders (30) an dem zweiten Gehäuseabschnitt (19) ausgebildet ist, und wobei eine erste Mittelachse (20) des ersten Gehäuseabschnitts (18) und eine zweite Mittelachse (21) des zweiten Gehäuseabschnitts (19) einen Winkel in einem Intervall zwischen 60 und 120 Grad einschließen.

2. Adapterelement nach Anspruch 1, **dadurch gekennzeichnet, dass** der Winkel zwischen der ersten Mittelachse (20) des ersten Gehäuseabschnitts (18) und der zweiten Mittelachse (21) des zweiten Gehäuseabschnitts (19) 90 Grad beträgt.

3. Adapterelement nach Anspruch 1 oder 2, **dadurch gekennzeichnet, dass** die zweite Verbindungsschnittstelle (29) eine Befestigungselementaufnahme (31), insbesondere eine Ausnehmung, zur Aufnahme eines Befestigungselements (27), insbesondere eine Befestigungsklammer, aufweist.

4. Adapterelement nach Anspruch 3, **dadurch gekennzeichnet, dass** das Befestigungselement (27) zur Festlegung des Fluidverbinders (30) abschnittsweise in die Befestigungselementaufnahme (31) und in einen Aufnahmeabschnitt (34) des Fluidverbinders (30) eingreifen kann.

5. Adapterelement nach einem der Ansprüche 1 bis 4, **dadurch gekennzeichnet, dass** die erste Verbindungsschnittstelle (22) ein Gewinde aufweist.

6. Adapterelement nach einem der Ansprüche 1 bis 4, **dadurch gekennzeichnet, dass** die erste Verbindungsschnittstelle (22) eine Spiralnut oder ein radial gegenüber dem ersten Gehäuseabschnitt (18) vorstehendes Rastelement aufweist.

7. Adapterelement nach einem der Ansprüche 1 bis 4, **dadurch gekennzeichnet, dass** die erste Verbindungsschnittstelle (22) für eine Steckverbindung ausgeführt ist, wobei die erste Verbindungsschnittstelle (22) eine Ausnehmung (26), insbesondere eine radial umlaufende Nut, aufweist, in die ein Befestigungselement (27), insbesondere eine Befestigungsklammer, eingreifen kann.

8. Adapterelement nach einem der vorherigen Ansprüche, **dadurch gekennzeichnet, dass** die zweite Verbindungsschnittstelle (29) zu der ersten Verbindungsschnittstelle (22) korrespondierend ausgeführt ist.

9. Adapterelement nach einem der vorherigen Ansprüche, **dadurch gekennzeichnet, dass** eine Erstreckung des ersten Gehäuseabschnitts (18) entlang der ersten Mittelachse (20) größer als eine Erstreckung des zweiten Gehäuseabschnitts (19) entlang der zweiten Mittelachse (21) ist.

10. Ventil-Verkettungsplatte (8) zum Einsatz in einer Ventileinrichtung (1), mit einer ersten an einer Stirnseite (9) einer Ventilscheibe (4) ausgebildeten ersten Verbinderaufnahme (10) und einer an der Stirnseite (9) ausgebildeten zweiten Verbinderaufnahme (11), die von der ersten Verbinderaufnahme (10) beabstandet ist, **dadurch gekennzeichnet, dass** die erste Verbinderaufnahme (10) und die zweite Verbinderaufnahme (11) jeweils für eine Aufnahme eines Adapterelements (12) nach einem der vorherigen Ansprüche ausgestaltet ist.

11. Ventil-Verkettungsplatte nach Anspruch 10, **dadurch gekennzeichnet, dass** ein erstes Adapterelement (12) in der ersten Verbinderaufnahme (10) und ein zweites Adapterelement (12) in der zweiten Verbinderaufnahme (11) angeordnet sind, wobei die Erstreckung des ersten Gehäuseabschnitts (18) des ersten Adapterelements (12) größer als die Erstreckung des ersten Gehäuseabschnitts (18) des zweiten Adapterelements (12) ist.

12. Ventilverkettungsplatte nach Anspruch 11, **dadurch gekennzeichnet, dass** die zweite Verbindungsschnittstelle (29) des ersten Adapterelements (12) und/oder die zweite Verbindungsschnittstelle (29) des zweiten Adapterelements (12) in Richtung einer Oberseite (13) oder in Richtung einer Unterseite (39) der Ventilverkettungsplatte (8) orientiert ist.

13. Ventil-Verkettungsplatte nach einem der Ansprüche 10 bis 12, **dadurch gekennzeichnet, dass** die erste Verbinderaufnahme (10) aus der Gruppe: Einschraubverbinderaufnahme, Bajonettverbinderaufnahme, Einsteckverbinderaufnahme und die zweite Verbinderaufnahme (11) aus der Gruppe: Einschraubverbinderaufnahme, Bajonettverbinderaufnahme, Einsteckverbinderaufnahme ausgewählt ist.

14. Ventil-Verkettungsplatte nach einem der Ansprüche 10 bis 13 in Verbindung mit einem der Ansprüche 7 bis 9, wobei an der Stirnseite (9) eine Adapterbefestigungsschnittstelle (28), die sich zumindest abschnittsweise über den Bereich der ersten Verbinderaufnahme (10) und zumindest abschnittsweise über den Bereich der zweiten Verbinderaufnahme (11) erstreckt und zur Aufnahme eines Befestigungselements (32), insbesondere in Form einer Befestigungsklammer, zur gemeinsamen Festlegung des in der ersten Verbinderaufnahme (10) aufgenommenen Adapterelements (12) und des in der zweiten Verbinderaufnahme (11) aufgenommenen Adapterelements (12) ausgebildet ist.
